# EUROPEAN PATENT APPLICATION

(11) **EP 4 356 712 A1**
(43) Date of publication of application: **24.04.2024**
(21) Application number: 23203633.5
(22) Date of filing: 13.10.2023
(51) Int. Cl.: A01D 41/14, A01D 45/02

(54) **CORN HEADER HEIGHT CONTROL SYSTEM**

(30) Priority: 14.10.2022 US 202263416044 P
(71) Applicant: CNH Industrial America LLC, New Holland, PA 17557 (US)
(72) Inventor: HUNT, Cory Douglas, New Holland, 17557 (US); MISSOTTEN, Bart M. A., New Holland, 17557 (US)
(74) Representative: Keltie LLP

(57) **Abstract**

A control system (300) for a corn header (200) includes a controller (316). The controller (316) includes a memory (318) and one or more processors (320). The controller (316) is configured to receive a signal from a radar sensor (302) indicative of a return magnitude at a plurality of targets along an axis emanating from the radar sensor. The controller (316) is also configured to determine a measured ear layer height (156) based on the return magnitude at the plurality of targets. Furthermore, the controller (316) is configured to control a header height actuator (202) to adjust a picking height (158) of the corn header (200) based on the measured ear layer height (156).

## Description

### BACKGROUND

The present disclosure relates generally to a corn header height control system of an agricultural system.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

An agricultural system is used to harvest crops, such as barley, beans, beets, carrots, corn, cotton, flax, oats, potatoes, rye, soybeans, wheat, or other plant crops. Corn is a crop commonly harvested via agricultural systems. A combine (e.g., combine harvester) is a type of harvester generally used to harvest corn. During operation of a combine, the harvesting process may begin by removing agricultural crops from a field, such as by using a header. The header may cut the agricultural crops and transport the crops to a processing system of the combine.

The corn harvesting process involves aligning a corn header with rows of crops and positioning the corn header such that the picking height (e.g. the height at which the corn header makes contact with the crops) is below the height of ears of corn (e.g. the ear layer). Setting the picking height of the corn header below the height of the ears of corn causes the ears of corn to remain above the corn header as the stalk is pulled through the row units, thus providing proper separation of the ears from the stalk. The picking height of the corn header may be manually controlled by an operator within a cab of the harvester. Unfortunately, due to the dust and debris present at the corn header, it may be difficult for the operator to determine the height of the ear layer during the harvesting process.

### BRIEF DESCRIPTION

This summary is provided to introduce a selection of concepts that are further described below in the detailed description. This summary is not intended to identify key or essential features of the claimed subject matter, nor is it intended to be used as an aid in limiting the scope of the claimed subject matter.

A control system for a corn header includes a controller. The controller includes a memory and one or more processors. The controller is configured to receive a signal from a radar sensor indicative of a return magnitude at a plurality of targets along an axis emanating from the radar sensor. The controller is also configured to determine a measured ear layer height based on the return magnitude at the plurality of targets. Furthermore, the controller is configured to control a header height actuator to adjust a picking height of the corn header based on the measured ear layer height.

### DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural system, in accordance with an aspect of the present disclosure;
FIG. 2 is a perspective view of an embodiment of a corn header that may be employed within the agricultural system of FIG. 1, in accordance with an aspect of the present disclosure;
FIG. 3 is a perspective front view of a portion of the corn header of FIG. 2, in accordance with an embodiment of the present disclosure;
FIG. 4 is a schematic view of an embodiment of a control system that may be used in the agricultural system of FIG. 1, in which the control system includes radar sensor(s) mounted on the corn header, in accordance with an aspect of the present disclosure;
FIG. 5 is a side view of an embodiment of the agricultural system of FIG. 1 with at least two radar sensors mounted on the corn header, in accordance with an aspect of the present disclosure;
FIG. 6 is a graph of measurements received by at least two radar sensors of FIG. 5, in accordance with an aspect of the present disclosure;
FIG. 7 is a side view of an embodiment of the agricultural system of FIG. 1 with at least one radar sensor mounted to the corn header and angled upwardly and inwardly, in accordance with an aspect of the present disclosure; and
FIG. 8 is a graph of the measurements received by the radar sensor of FIG. 7, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification.

The process of farming typically begins with planting seeds within a field. Over time, the seeds grow and eventually become harvestable crops. Typically, only a portion of each crop is commercially valuable, so each crop is harvested to separate the usable material (e.g. corn kernels) from the remainder of the crop. The agricultural system may be at least partially automated so as to harvest crops at least partially independent of human control. During automated corn harvesting, the agricultural system may encounter crops of varying ear layer heights (i.e. height of the ear on the stalk). Accordingly, the agricultural system may be outfitted with one or more of sensors. A control system may utilize data gathered from the sensor(s) to adjust the picking height of the header (e.g. by adjusting the header height), such that the header contacts each crop below the ear layer. The same sensor(s) used for sensing the ear layer height may also be used to facilitate alignment of the header with the rows of crops.

The present disclosure is directed to a control system that may be utilized to automate the adjustment of header picking height and/or header alignment using at least one radar sensor (e.g., one-dimensional radar sensor). For instance, the radar sensor(s) may be directed toward the crops, so as to distinguish between an ear layer and a stalk layer. The radar sensor(s) may also point upwardly and inwardly relative to the longitudinal axis of the agricultural system, so that the corresponding regions of detection for each sensor intersect the rows of crops at different heights. The control system uses the detected ear layer height to adjust the picking height of the header, such that the height at which the header contacts the crops is below the ear layer height.

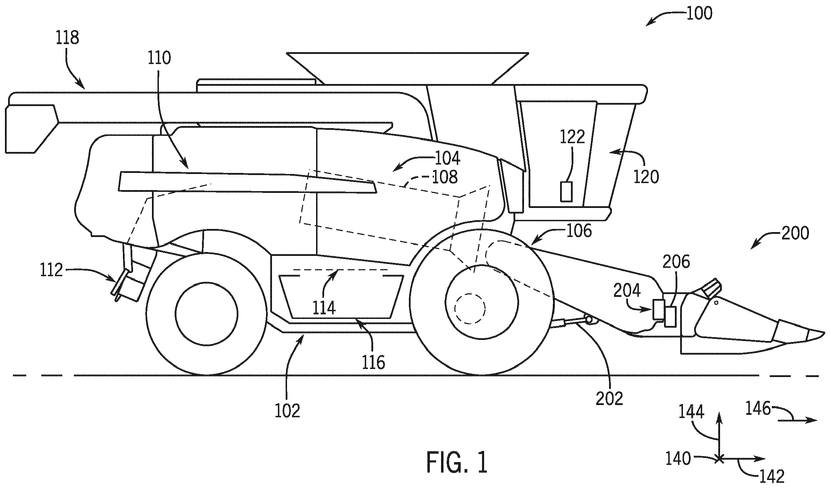

With the foregoing in mind, FIG. 1 is a side view of an embodiment of an agricultural system 100 (e.g. harvester). The agricultural system 100 includes a chassis 102 configured to support a corn header 200 and an agricultural crop processing system 104. As described in greater detail below, the corn header 200 is configured to transport the crops toward an inlet 106 of the agricultural crop processing system 104 for further processing of the crops. The agricultural crop processing system 104 receives the crops from the corn header 200 and separates desired crop material from crop residue. For example, the agricultural crop processing system 104 may include a thresher 108 having a cylindrical threshing rotor that transports the crops in a helical flow path through the agricultural system 100. In addition to transporting the crops, the thresher 108 may separate certain desired crop material (e.g., corn kernels) from the crop residue, such as husks and cobs, and may enable the desired crop material to flow into a cleaning system 114 (such as sieves) located beneath the thresher 108. The cleaning system 114 may remove debris from the desired crop material and enable the desired crop material to move to a storage tank 116 within the agricultural system 100. When the storage tank 116 is full, a tractor with a trailer may be positioned alongside the agricultural system 100. The desired crop material collected in the storage tank 116 may be carried up by an elevator and expelled out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. The agricultural system 100 may also include a cabin 120. To facilitate discussion, the agricultural system 100 and/or its components (e.g., the corn header 200) may be described with reference to a lateral axis or direction 140, a longitudinal axis or direction 142, and a vertical axis or direction 144. The agricultural system 100 and/or its components (e.g., the corn header 200) may also be described with reference to a direction of travel 146.

In the illustrated embodiment, the agricultural system 100 includes one or more actuators configured to control the spatial orientation and/or position of the corn header 200 with respect to the agricultural system chassis 102, and/or the spatial orientation and/or position of the corn header 200 with respect to the crop rows or ground/soil. A header height actuator 202 may drive the corn header 200 to move along the vertical axis 144 relative to the ground. The corn header 200 may be attached to the chassis 102 via a linkage (e.g., four-bar linkage, etc.). The position of the linkage may be controlled by the header height actuator 202 to adjust the height of the corn header. The agricultural system 100 may also include a header roll actuator 204. The header roll actuator 204 may be configured to rotate the corn header 200 in roll relative to the ground about the longitudinal axis 142. The agricultural system 100 may also include a header pitch actuator 206. The header pitch actuator 206 may be configured to rotate the corn header 200 in pitch relative to the ground about the lateral axis 140. The agricultural system 100 may also include a steering system 122. The steering system 122 may be configured to control the direction of the agricultural system 100 and the corn header 200 along a path. The steering system 122 may include one or more mechanical and/or electronic components configured to control the steering components of the agricultural system, such as a set of hand controllers and/or actuators configured to steer wheels of the agricultural system. The agricultural system 100 may also include a harvester speed control system. The harvester speed control system may be configured to control the forward ground speed of the agricultural system 100 and/or the corn header 200.

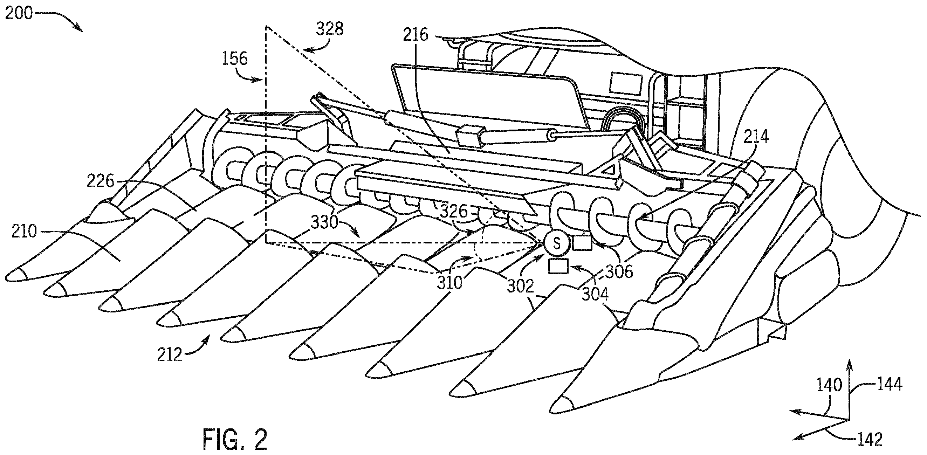

FIG. 2 is a perspective view of an embodiment of the corn header 200 that may be employed within the agricultural system of FIG. 1. In the illustrated embodiment, the corn header 200 includes multiple dividers 210 configured to separate rows of a crop (e.g. corn). The dividers 210 may be evenly spaced along the header horizontally (e.g., along the lateral axis 140). As the corn header moves along the path, the dividers 210 may direct crops from each row to a respective row unit 212. The row unit(s) 212 are configured to separate the corn ears from the rest of the crop (e.g., stalk). The corn ears may be directed to one of a pair of augers 214 configured to convey the ears laterally inward to a conveyor 216 at the center of the header. As illustrated, the augers 214 extend along a substantial portion of the width of the corn header 200 (e.g., along the lateral axis 140). The augers 214 may be driven by a driving mechanism (e.g., electric motor, hydraulic motor, etc.). As the agricultural system is driven through the field, the dividers 210 direct the row(s) of crops into the row unit(s) 212. The row unit(s) engage the crops within the field, and the augers 214 transport the crop to the conveyor 216, which directs the crops toward the inlet of the agricultural crop processing system. In the illustrated embodiment, the corn header 200 is equipped with radar sensor(s) 302, which may be translatable via a sensor position actuator 304 and/or rotatable via a sensor orientation actuator 306.

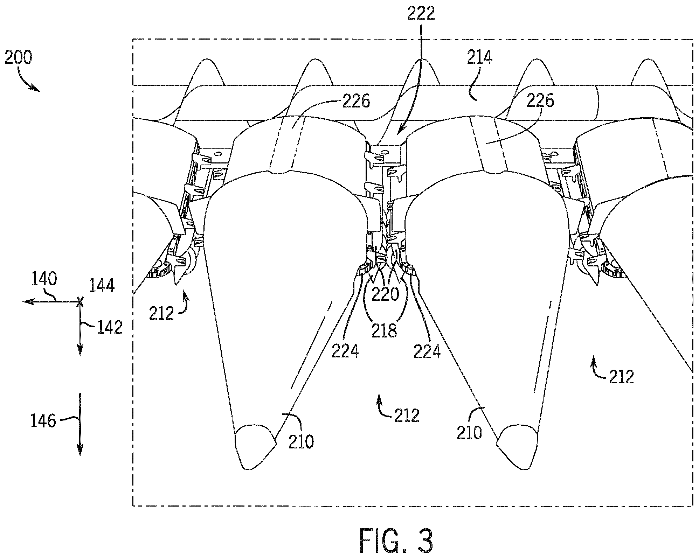

FIG. 3 is a perspective front view of an embodiment of a portion of the corn header 200. As shown, the portion of the corn header 200 includes the dividers 210 that direct the crops to one or more row unit(s) 212. Each row unit 212 includes various components that operate to separate corn ears from the stalks, carry the corn ears toward the conveyors, and return the stalks to the field. For example, each row unit 212 may include a pair of feed rollers 218 that are configured to grip the stalks and rotate in opposite directions to push the stalks toward the field (e.g., vertically downward; below the corn header 200). Each row unit 212 also includes a pair of deck plates 220 that are positioned over the pair of feed rollers 218. Each deck plate 220 extends along the longitudinal axis 142, and the pair of deck plates 220 are separated from one another along the lateral axis 140 to define a gap 222. Further, each row unit 212 may include a pair of chains 224 (e.g., with lugs) that are configured to drive or push the corn ears along the pair of deck plates 220 toward the conveyors 216. The pair of deck plates 220 are spaced apart so that the gap 222 is sized to enable the stalks to move through the gap 222, but to block the ears of corn from moving through the gap 222. In certain embodiments, the pair of deck plates 220 are adjustable and may be driven (e.g., via an actuator) toward and away from one another along the lateral axis 140 to change a size of the gap 222. A hood 226 is positioned rearward of each divider 210 and between adjacent row units 212 to cover various components, such as the actuator that drives the pair of deck plates 220, linkages, and so forth.

For effective harvesting performance, the corn ear may initially contact the pair of deck plates 220 at a forward portion of the pair of deck plates 220 relative to the longitudinal axis 142 or the forward direction of travel 146 of the corn header 200. This contact may enable the stalks to be completely discharged from the corn header 200 before reaching a rear portion of the pair of deck plates 220, thereby reducing a likelihood of the stalks being fed into the conveyors.

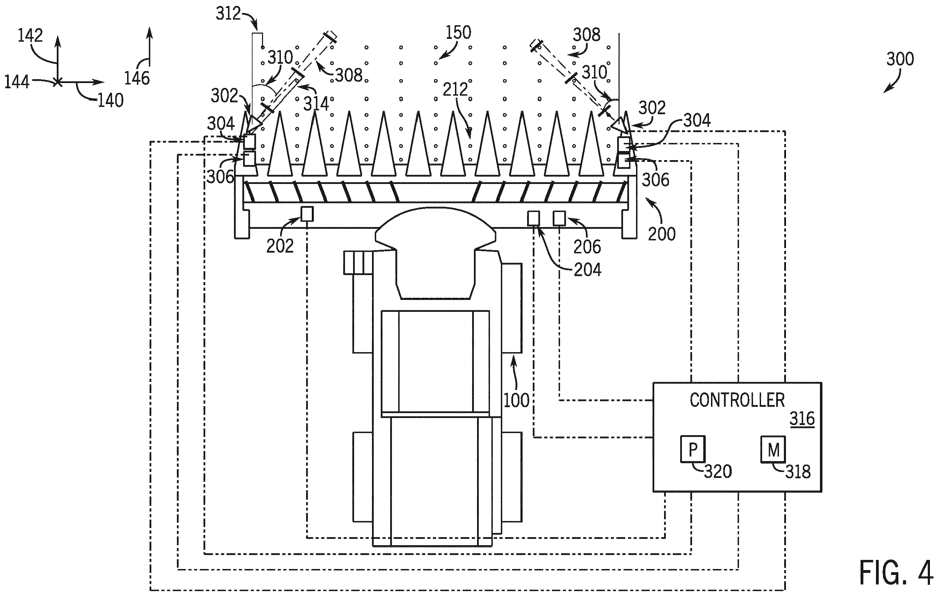

FIG. 4 is a schematic view of an embodiment of a control system 300 that may be used in the agricultural system 100, in which the row units 212 of the corn header 200 are aligned with rows of crops 150. In the illustrated embodiment, radar sensor(s) 302 are coupled (e.g. mechanically) to the corn header 200 of the agricultural system 100. In the illustrated embodiment, one radar sensor 302 is coupled to the left side of the corn header 200, and another radar sensor 302 is coupled to the right side of the corn header 200. In certain embodiments, the radar sensor(s) 302 may be additionally or alternatively coupled to the cabin of the agricultural system 100. The radar sensor(s) 302 point in the direction of travel 146 and are angled inwardly (e.g., toward the longitudinal axis 142), such that the region(s) of detection 308 of the radar sensor(s) are configured to intersect multiple rows of crops. In certain embodiments, the radar sensor(s) 302 may be angled outwardly and away from the longitudinal axis 142 of the agricultural system 100. In certain embodiments, the radar sensor(s) 302 may be angled upwardly with respect to longitudinal axis 142 and positioned below the ear layer of the rows of crops 150. While the control system 300 includes two radar sensors 302 in the illustrated embodiment, in other embodiments, the control system may include more or fewer radar sensors (e.g., 1, 3, 4, 5, 6, or more).

In the illustrated embodiment, the control system 300 includes a controller 316 configured to receive data from the radar sensor(s) 302 and to control operation of at least a portion of the agricultural system 100, such as the alignment of the corn header 200 with the rows of crops 150 and the picking height of the corn header 200. The controller 316 includes a memory 318 and a processor 320 (e.g., a microprocessor). The controller 316 may also include one or more storage devices and/or other suitable components. The processor 320 may be used to execute software, such as software for controlling the agricultural system and/or the corn header. Moreover, the processor 320 may include multiple microprocessors, one or more "general-purpose" microprocessors, one or more special-purpose microprocessors, and/or one or more application specific integrated circuits (ASICS), or some combination thereof. For example, the processor 320 may include one or more reduced instruction set (RISC) or complex instruction set (CISC) processors. The memory 318 may include a volatile memory, such as random access memory (RAM), and/or a nonvolatile memory, such as read-only memory (ROM). The memory 318 may store a variety of information and may be used for various purposes. For example, the memory 318 may store processor-executable instructions (e.g., firmware or software) for the processor 320 to execute, such as instructions for controlling the agricultural system and/or the corn header. The memory 318 and/or the processor 320, or an additional memory and/or processor, may be located in any suitable portion of the agricultural system. By way of example, the controller 316 may be located in the cabin of the agricultural system and/or on the corn header.

In the illustrated embodiment, the controller 316 is communicatively coupled to the radar sensor(s) 302 and configured to receive data from the radar sensors. The radar sensor(s) 302 are configured to output 1D distance data to the controller 316. The radar sensor(s) 302 are configured to detect multiple targets along an axis emanating from the sensor (e.g. regions of detection 308) and output the detection of the objects in the form of 1D distance data. The 1D distance data represents the amount of reflected signal/energy (e.g. in response to the density of the objects intersected by the region(s) of detection 308) for each distance along the axis emanating from the sensor. Based on the signal received from the radar sensor(s) corresponding to the amount of reflected signal/energy along the axis emanating from the sensor (e.g. signal(s) representing measured ear layer height(s)), the controller 316 (e.g. via the processor(s) 320) is configured to determine a return magnitude of the signal(s). The controller 316 (e.g. via the processor(s) 320) is configured to determine the measured ear layer height based on the return magnitude of the signals. The controller 316 (e.g. via the processor(s) 320) is configured to control the header height actuator 202 of the corn header 200 to adjust the picking height of the corn header 200 based on the measured ear layer height. In certain embodiments, the controller 316 is configured to adjust the picking height of the corn header 200 (e.g. via header height actuator 202) to be below the measured ear layer height of the ear layer. As a result, the row units may effectively separate the ears from the stalks during the harvesting operation. In certain embodiments, the controller 316 (e.g. via the processor(s) 320) is configured to determine a target picking height of the corn header 200, such that the target picking height is below the measured ear layer height of the ear layer. The controller 316 (e.g. via the processor(s) 320) may then control the header height actuator 202 to adjust the picking height of the corn header 200 to match the target picking height (e.g., to be within 20 percent of the target picking height, to be within 10 percent of the target picking height, to be within 5 percent of the target picking height, to be within 1 percent of the target picking height, etc.). In certain embodiments, the controller 316 (e.g. via the processor(s) 320) is configured to control other suitable aspects of the corn header 200 and/or the agricultural system 100 (e.g., header row alignment, header pitch angle, header roll angle, or a combination thereof) based on the 1D distance data from the sensors.

In certain embodiments, the controller 316 may be configured to adjust the orientation (e.g. yaw angle 310) of the radar sensor(s) 302 relative to the longitudinal axis 142 (e.g. via sensor orientation actuator(s) 306). The orientation of the radar sensor(s) may be bounded between minimum and maximum angles. Furthermore, the controller 316 may be configured to adjust the orientation (e.g. yaw angle 310) of the radar sensors 302 (e.g., via sensor orientation actuator(s) 306) independently (e.g. based on input from a user interface). For example, one radar sensor may be directed at the rows of crops 150 at a steeper angle, while the other radar sensor may be directed at the rows of crops 150 at a shallower angle. While the control system 300 includes radar sensor(s) 302 in the illustrated embodiment, in certain embodiments, the control system may include additional sensor(s), such as Lidar sensor(s), ultrasonic sensor(s), camera(s), infrared sensor(s), other suitable type(s) of sensor(s), or a combination thereof.

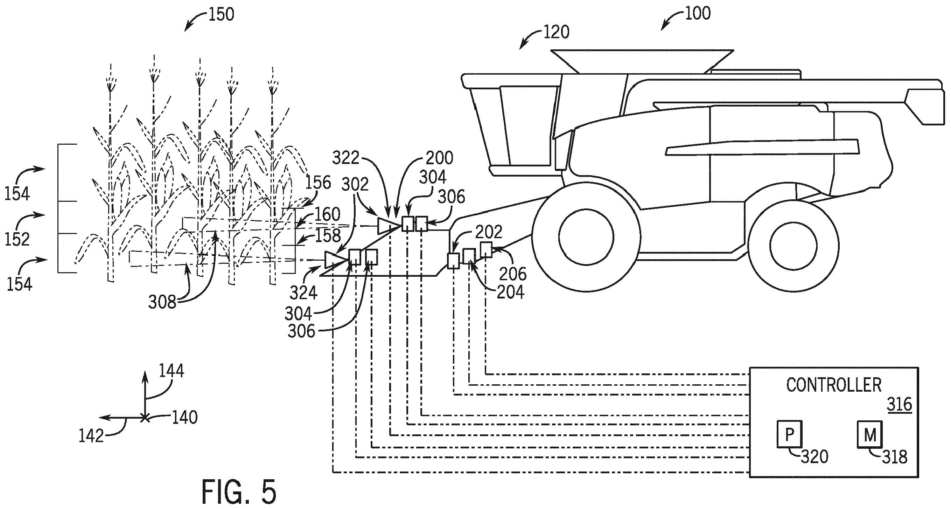

FIG. 5 is a side view of an embodiment of the agricultural system 100 of FIG. 1 with at least two radar sensors mounted on the corn header 200. As illustrated, at least one radar sensor coupled to the header is oriented such that the region of detection 308 of the radar sensor is substantially parallel to the ground and positioned at the height 156 of the ear layer 152. In the illustrated embodiment, the controller 316 is configured to receive signals from the radar sensors 302, which are coupled to the same lateral side of the corn header 200 at different heights. In certain embodiments, the two radar sensors 302 may be mounted on opposite sides of the corn header 200. In the illustrated embodiment, a high radar sensor 322 is coupled to a higher portion of the corn header 200, and a low radar sensor 324 is coupled to a lower portion of the corn header 200. The high radar sensor 322 is configured to detect the ear layer 152 and the low radar sensor 324 is configured to concurrently detect the stalk layer. In certain embodiments, both radar sensors are angled inwardly (e.g. via sensor orientation actuator 306) toward the longitudinal axis 142 of the agricultural system 100, while in other embodiments the radar sensor(s) are pointed in the direction of travel 146 (e.g., parallel to the longitudinal axis 142). In certain embodiments, at least one the radar sensor 302 is configured to be adjustable in orientation (e.g. via sensor position actuator 304).

In certain embodiments, the controller 316 may be configured to receive a signal from the low radar sensor 324 and concurrently receive a signal from the high radar sensor 322. The controller 316 may be configured to determine the return magnitudes of the signals received from both low radar sensor 324 and high radar sensor 322. The controller 316 may be configured to detect ear layer 152 at the vertical height of the low radar sensor 324 and the vertical height of the low radar sensor 322, based on the return magnitudes determined for each sensor. The controller 316 may be configured to control the header height actuator 202 to decrease the picking height 158 of the corn header 200 in response to detecting the ear layer 152 at the vertical height of the low radar sensor 324. The controller 316 may be configured to control the header height actuator 202 to increase the picking height 158 of the corn header 200 in response to detecting the ear layer 152 at the vertical height of high radar sensor 322. In this manner, the controller 316 may be configured to control the header height actuator 202 to adjust the picking height 158 of the corn header 200, such that the ear height 156 exceeds the height of the low radar sensor 324, and the height of the high radar sensor 322 exceeds the ear height 156. In certain embodiments, the controller 316 is configured to determine a target picking height of the corn header 200, such that the target picking height is between the height (e.g. coupling height, mounting height) of the low radar sensor 324 and the height (e.g. coupling height, mounting height) of the high radar sensor 322. The controller 316 (e.g. via the processor(s) 320) may be configured to control the header height actuator 202 to adjust the picking height of the corn header 200 to match the target picking height (e.g., to be within 20 percent of the target picking height, to be within 10 percent of the target picking height, to be within 5 percent of the target picking height, to be within 1 percent of the target picking height, etc.) in response to either the low radar sensor 324 or the high radar sensor 322 detecting the ear layer 152 (e.g. the region(s) of detection 308 of the sensor(s) crossing the ear layer 152). In certain embodiments, the controller 316 may be configured to determine the number of occurrences (e.g. frequency, count) that the low radar sensor 324 detects the ear layer 152 and/or the number of occurrences (e.g. frequency, count) that the high radar sensor 322 detects the ear layer 152. The controller 316 may be configured to control sensor position actuator(s) 304 to adjust the heights (e.g. mounting height, coupling height) of the low radar sensor 324 and/or high radar sensor 322 based on the number of ear layer detections (e.g. frequency, count) from the low radar sensor 324 and/or high radar sensor 322. In certain embodiments, the number of ear layer detections (e.g. frequency, count) from the low radar sensor 324 and/or high radar sensor 322 may be used to further determine the location of the ear layer 152.

In certain embodiments, the controller 316 may be configured to receive a signal from the low radar sensor 324 and concurrently receive a signal from the high radar sensor 322. In certain embodiments, the low radar sensor 324 and/or the high radar sensor 322 may be angled upwardly with respect to the longitudinal axis 142. The low radar sensor 324 and/or the high radar sensor 322 may be configured to detect multiple targets along the axis emanating from the sensors. Accordingly, the controller 316 may be configured to receive signal(s) from the low radar sensor 324 and/or the high radar sensor 322 indicative of a measured ear layer height. The controller 316 may be configured to determine the measured ear layer height based on the signal(s) received by the low radar sensor 324 and/or the high radar sensor 322. The controller 316 may be configured to control the header height actuator 202 to adjust a picking height of the corn header 200 based on the measured ear layer height. In certain embodiments, the controller 316 is configured to determine a target picking height of the corn header 200, such that the target picking height is below the measured ear layer height. The controller 316 (e.g. via the processor(s) 320) may be configured to control the header height actuator 202 to adjust a picking height of the corn header 200 to match the target picking height (e.g., to be within 20 percent of the target picking height, to be within 10 percent of the target picking height, to be within 5 percent of the target picking height, to be within 1 percent of the target picking height, etc.).

Additionally, the controller 316 may be configured to receive an input indicative of a corn header height guidance mode (e.g., from the user interface). The controller 316 may be configured to enter the corn header height guidance mode in response to receiving the input. Once set to corn header height guidance mode, the controller 316 may be configured to control the header height actuator 202 to decrease the picking height 158 of the corn header 200 in response to the low radar sensor 324 detecting the ear layer 152. The controller 316 may be configured to control the header height actuator 206 to increase the picking height 158 of the corn header 200 in response to the high radar sensor 322 detecting the ear layer 152. Accordingly, the controller 316 may be configured to control the header height actuator 202 to adjust the picking height 158 of the corn header 200, such that the ear height 156 of the ear layer 152 exceeds the height of the low radar sensor 324, and such that the height of the high radar sensor 322 exceeds the ear height 156 of the ear layer 152.

In certain embodiments, the controller 316 may be configured to adjust the height of the high radar sensor 322 and the low radar sensor 324 in the vertical direction 144 by controlling the header height actuator 202 to translate the corn header 200 along the vertical axis 144. The controller 316 may determine the measured ear layer height of the ear layer 152 in response to the high radar sensor 322 detecting (e.g. crossing) the ear layer 152 (e.g. via an increase in signal magnitude from the high radar sensor 322). The controller 316 may then control the header height actuator 202 to adjust the picking height 158 of the corn header 200 based on the measured ear layer height (e.g. adjust picking height 158 to be below the measured ear layer height). In certain embodiments, in response to the high radar sensor 322 detecting the ear layer 152, the corn header 200 stops translating along vertical axis 144 due to being positioned at the desired picking height, due to the high radar sensor 322 being positioned higher than the location at the corn header 200 at which contact is made when the corn header 200 is at the picking height 158.

In certain embodiments, two or more radar sensors 302 are incrementally coupled along the height of the corn header 200. By increasing the number of radar sensors 302 used in the array of sensors, the ear layer height 156 may be determined more quickly. Upon one of the radar sensor(s) 302 of the array of radar sensors detecting the ear layer 152, the picking height 158 of the corn header 200 is adjusted by the controller 316 to be below the ear height 152.

In certain embodiments, at least one the radar sensor 302 is configured to be adjustable in height relative to the ground (e.g. manually; via sensor position actuator 304). For example, the radar sensor may be configured to transition (e.g. move upwardly or downwardly) from the stalk layer 154 to the ear layer 152 of the rows of crops 150. The transition of the regions of detection 308 of the radar sensor from the stalk layer 154 to the ear layer 152 causes an increase in the height of the peaks of the signal produced by the radar sensor 302.

In certain embodiments, measurements of the radar sensor(s) 302 are recorded over time as they move from a low position to a high position (e.g. or high position to low position) while completely crossing the ear layer 152. A metric representing the height of the peaks (e.g. maximums of signal(s)) is recorded during the movement of the radar sensor(s) 302 in the vertical direction 144. The controller 316 is configured to determine the height of the ear layer 152 based on an increase (e.g. above a threshold amount) in height of the peaks (e.g. highest level of signal(s) reflected) from the radar sensor(s) 302.

In certain embodiments, the picking height 158 of the corn header 200 may be set to a threshold distance 160 below the measured ear layer height (e.g. ear layer height 156). The threshold distance 160 may be a fixed value, or may be adjustable (e.g. via a user interface) between minimum and maximum threshold distances (e.g. fixed minimum and/or maximum; adjustable minimum and/or maximum). In certain embodiments, the threshold distance 160 may be adjusted by first adjusting the height of the uppermost radar sensor 302 and then adjusting the height of the corn header 200 until the uppermost radar sensor detects the ear layer 152. The controller 316 may be configured to stop movement of the corn header 200 upon the uppermost radar detecting the ear layer 152. Provided the corn header 200 is configured to stop in response to the uppermost radar sensor 302 detecting the ear layer 152, changing the height of the uppermost radar sensor 302 will change where the corn header 200 stops. In certain embodiments, the height at which the corn header 200 stops corresponds to the picking height 158 at the threshold distance 160 below the ear layer height 156.

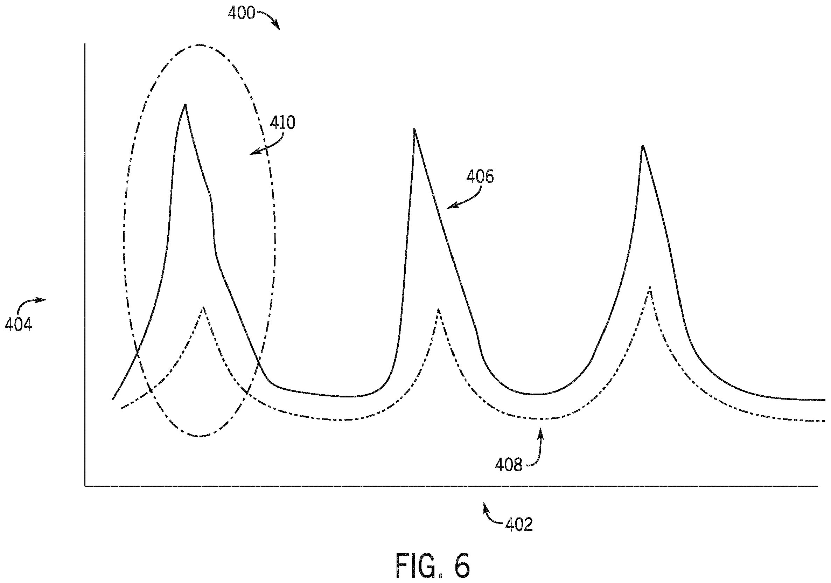

FIG. 6 is a graph 400 of measurements received by at least two radar sensors of FIG. 5. The x-axis of the graph is the distance 402 (e.g. along the axis of region(s) of detection) from the emission source of the radar sensor. The y-axis 404 is a relative measurement of the percentage of signal reflected (e.g. reflected signal) at the distance away from the emission source of the radar sensor. The solid line 406 in the graph corresponds to the measurements received by the radar sensor when the radar sensor is at the same height as the ear layer, while the dotted line 408 in the graph corresponds to the measurements received by the radar sensor when the radar sensor is at the same height as the stalk layer. The solid line 406 in the graph is higher than the dotted line 408 because the ear layer is denser than the stalk layer, thus a higher percentage of the signal emitted by the radar sensors is reflected. In the illustrated embodiment, the peaks 410 in both lines correspond to the regions of detection intersecting the rows of crops (e.g. due to the radar sensor(s) being angled across the rows of crops), which is of a higher density than the space in between the rows.

As previously discussed, in certain embodiments, at least two radar sensors point straight forward (e.g., parallel to the longitudinal axis). Because each radar sensor is coincident with only a single row of the rows of crops, no peaks corresponding to multiple rows may be present. Instead, a radar sensor coincident with a single row of crops may produce a signal with peaks spaced closer together, corresponding to the spacing between the individual crops in the row. The shorter spacing between the peaks may enable the controller to differentiate a radar sensor intersecting a single row of crops versus a radar sensor intersecting multiple rows of crops. In certain embodiments, the ear layer 152 may be determined by using the height of the radar sensor(s) 302 at which the heights of the peaks suddenly increase (e.g. higher peaks at ear layer 152).

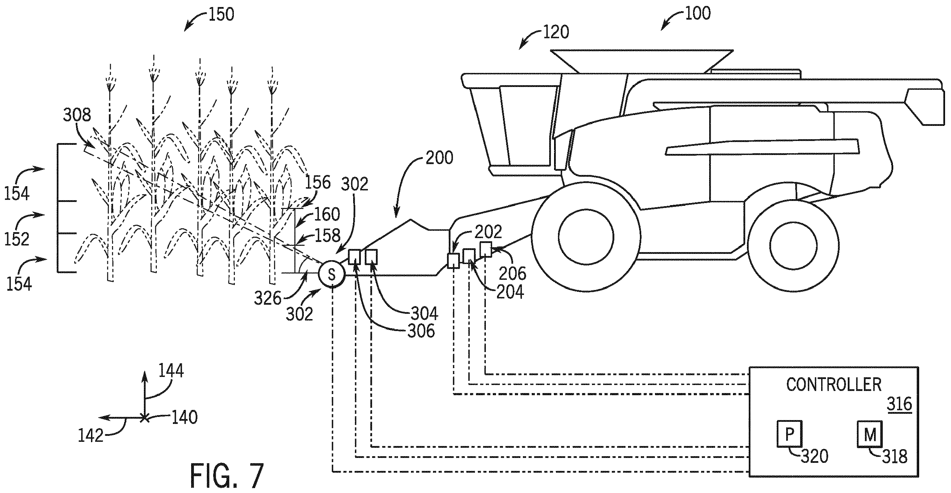

FIG. 7 is a side view of an embodiment of the agricultural system 100 of FIG. 1 with at least one radar sensor mounted to the corn header and angled upwardly and inwardly (e.g. toward the longitudinal axis 142). In the illustrated embodiment, the radar sensor(s) 302 are mounted at a location on the corn header 200 such that the height of the radar sensor(s) 302 relative to the ground is lower than the ear layer height 156. The radar sensor(s) 302 are angled upwardly by a pitch angle 326 relative to the longitudinal axis 142 of the agricultural system 100 (e.g. toward the top of the crops), and the radar sensor(s) 302 are angled inwardly by a yaw angle relative to the longitudinal axis 142 of the agricultural system 100 (e.g. toward the middle). In this configuration, the regions of detection 308 of the radar sensor(s) 302 intersect the rows of crops 150 at different heights. In certain embodiments, upon determining the ear layer height 156 (e.g. the height of the ear layer 152 relative to the ground) based on feedback from the radar sensor(s), the controller 316 outputs a signal to the header height actuator 202 to raise or lower the corn header 200, such that the picking height 158 is below the ear layer height 156 (e.g. by threshold distance 160).

Referring to FIG. 2, in certain embodiments, the controller 316 may be configured to determine the ear layer height 156 (e.g. measured ear layer height) based on the distance between the radar sensor 302 and the ear layer of a row of crops 150 (e.g. first hypotenuse distance 328), which is monitored by the radar sensor, and the sensor orientation (e.g. the pitch angle 326). The ear layer height may be determined by using the first hypotenuse distance 328, which corresponds to the tallest peak in the signal received by the radar sensor 302 (e.g. distance corresponding to highest percent of signal reflected) and results from the intersection between the region of detection and the ear layer. In certain embodiments, the ear layer height may be determined by using the first hypotenuse distance 328 in conjunction with the pitch angle 326.

Returning back to FIG. 7, in certain embodiments, radar sensor(s) 302 may be coupled to the cabin 120 (e.g. cabin roof, wind shield, panel) of the agricultural system 100. These radar sensor(s) may be angled downwardly relative to the longitudinal axis 142 of the agricultural system 100 by a pitch angle and outwardly relative to the longitudinal axis 142 of the agricultural system 100 by a yaw angle, such that the regions of detection 308 of the radar sensor(s) intersect one or more rows of crops 150 from a location above the crops (e.g. regions of detection 308 approaching crops from the top).

In certain embodiments, at least one radar sensor 302 may be coupled to a respective sensor orientation actuator 306, which controls the orientation of the radar sensor in response to receiving a signal from the controller 316. The controller 316 may be configured to control the sensor orientation actuator(s) 306 to adjust the orientation of the radar sensor(s) 302 between respective minimum and maximum pitch angles and/or between minimum and maximum yaw angles. In response to the controller 316 changing the yaw angle 310, the region(s) of detection 308 of the radar sensor(s) 302 may be able to detect more or fewer rows of the rows of crops 150.In certain embodiments, the controller 316 may be configured to receive multiple ear layer height measurements, which may be determined by measuring the ear layer height of multiple rows of crops. For example, the controller 316 may be configured to receive multiple measurements from the same sensor at different orientations, such that multiple ear layer height measurements are obtained from the multiple sensor orientations. The controller 316 may be configured to determine a single aggregate ear layer height measurement based on the multiple ear layer height measurements taken at distinct sensor orientations. Upon determining an aggregate ear layer height 156 (e.g. the height of the ear layer 152 relative to the ground), the controller 316 may output a signal to the header height actuator 202 to raise or lower the corn header 200, such that the picking height 158 is below the ear layer height 156.

In certain embodiments, the radar sensor(s) 302 may be directed forwardly, parallel to the longitudinal axis 142. In such embodiments, the pitch angle 326 is non-zero, but the yaw angle is zero. The radar sensor(s) 302 may be coupled to a horizontal actuator, which moves the radar sensor(s) 302 along the lateral axis 140. The radar sensor(s) 302 may move in the lateral direction until aligned with one row of crops 150. Once aligned with the row, the controller 316 may use the measurements from the radar sensor(s) 302 to determine the ear layer height 156 of the crop. A measured lateral spacing between a row unit of the corn header 200 and a respective row of crops 150 may be obtained by measuring a translation distance of the actuator sufficient to align the radar sensor(s) 302 with the row of crops.

In certain embodiments, the controller 316 is configured to determine a baseline target picking height of the corn header 200 based on an input received by the operator (e.g. via an input device or user interface). The controller 316 may then control header the height actuator 202 to adjust the picking height of the corn header 200 to match the baseline target picking height. The controller 316 may then determine an updated target picking height (e.g. higher or lower than the baseline target picking height) based on one or more measured ear layer heights (e.g. determined by the controller 316 using data received from the radar sensor(s) 302). The controller 316 may then control the header height actuator 202 to adjust the picking height of the corn header 200 to match the updated target picking height (e.g., to be within 20 percent of the updated target picking height, to be within 10 percent of the updated target picking height, to be within 5 percent of the updated target picking height, to be within 1 percent of the updated target picking height, etc.).

In certain embodiments, the agricultural system 100 may include a combination of configurations of radar sensors 302. For example, in certain embodiments, a first group of radar sensors 302 may include radar sensors 302 coupled to the same lateral side of the corn header 200 at different heights and oriented parallel to the longitudinal axis 142, and a second group of radar sensors 302 may include radar sensors 302 mounted to the corn header 200 and angled upwardly and inwardly (e.g. toward the longitudinal axis 142). In certain embodiments, one radar sensor 302 may be coupled to a lower portion of the corn header 200 and angled upwardly with respect to the longitudinal axis 142, and a second radar sensor 302 may be coupled to an upper portion of the corn header 200 (e.g. or above the cabin 120) and angled downwardly with respect to the longitudinal axis 142. The radar sensors 302 may be configured to output signals indicative of ear height(s) (e.g. measured ear height(s)), and the controller 316 may be configured to receive the signals.

In certain embodiments, the controller 316 may be configured to control a combination of actuators based on feedback from the radar sensor(s) 302. For example, the controller 316 may be configured to control the header height actuator 202 to adjust a picking height of the corn header 200 to match a target picking height. In certain embodiments, the controller 316 may also be configured to concurrently control the header roll actuator 204 to adjust the roll angle of the corn header 200 to match a target roll angle (e.g., which may be determined by the controller based on feedback from the radar sensor(s)). In certain embodiments, the controller 316 may also be configured to concurrently control the header pitch actuator 206 to adjust the pitch angle of the corn header 200 to match a target pitch angle (e.g., which may be determined by the controller based on feedback from the radar sensor(s)).

In certain embodiments, the controller 316 may be configured to receive signal(s) from the radar sensor(s) 302. Each radar sensor 302 may be configured to detect multiple targets along an axis emanating from the radar sensor. In response to receiving the signal, the controller 316 may be configured to determine distance of the ear layer from the radar sensor based on the signal. In certain embodiments, the controller 316 may be configured to determine the distance of the ear layer from the radar sensor by comparing the signal to a threshold value, thereby identifying a peak (e.g. tallest peak) if the signal magnitude is greater than the threshold value. In response to identifying the tallest peak of the signal, the controller 316 may be configured to determine the distance of the ear layer from the radar sensor by using the distance corresponding to the tallest peak. In certain embodiments, in response to identifying the tallest peak of the signal, the controller 316 may be configured to determine the distance of the ear layer from the radar sensor based on the span of the signal that is above the threshold value. In certain embodiments, the controller 316 may be configured to determine the distance of the ear layer from the radar sensor based on the midpoint or the average of the span of the signal above the threshold value.

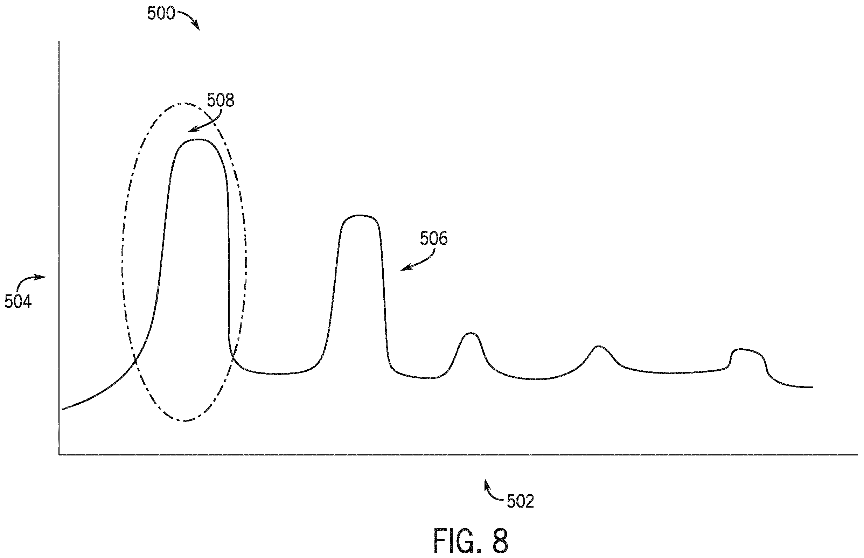

FIG. 8 is a second graph 500 of the measurements received by the radar sensor of FIG. 7. The signal shown in the second graph 500 represents the signal received by a radar sensor that is angled upwardly and inwardly with respect to the longitudinal axis, such that the region of detection of the radar sensor intersects multiple rows of crops. The x-axis of the graph is the distance 502 (e.g. distance along the central axis of the regions of detection) from the emission source of the radar sensor. The y-axis 504 is a relative measurement of the percentage of signal reflected at the distance away from the emission source of the radar sensor. The solid line 506 in the graph corresponds to the measurements received by the radar sensor at varying heights of the rows of crops. The peaks 508 in the second graph 500 correspond to the intersections of the regions of detection of the radar sensor with multiple rows of crops (e.g. stalks, leaves, ears). The tall peaks on the graph 500 correspond to the region of detection intersecting the ear layer (e.g. a higher percent of the signal is reflected). Because the ear layer is denser than the stalk layer, an intersection that occurs at the ear layer will produce a higher peak in the signal.

While only certain features have been illustrated and described herein, many modifications and changes will occur to those skilled in the art.

## Claims

1. A control system (300) for a corn header (200), the control system (300) comprising:
a first radar sensor (324) coupled to the corn header (200);
a second radar sensor (322) coupled to the corn header (200), wherein a first vertical height of the first radar sensor (324) relative to the corn header (200) is lower than a second vertical height of the second radar sensor (322) relative to the corn header (200); and
a controller (316) comprising a memory (318) configured to store instructions and one or more processors (320), wherein the controller (316) is configured to:
receive a first signal from the first radar sensor (324) indicative of a first return magnitude at a first plurality of targets along a first axis emanating from the first radar sensor (324), and concurrently receive a second signal from the second radar sensor (322) indicative of a second return magnitude at a second plurality of targets along a second axis emanating from the second radar sensor (322);
determine the first return magnitude based on the first signal;
determine the second return magnitude based on the second signal;
determine a measured ear layer height (156) based on the first return magnitude, the second return magnitude, or a combination thereof; and
control a header height actuator (202) to adjust a picking height (158) of the corn header (200) based on the measured ear layer height (156).

2. The control system (300) of claim 1, wherein the controller (316) is configured to:
determine a target picking height (158) of the corn header (200), wherein the target picking height (158) is below the measured ear layer height (156); and
control the header height actuator (202) to adjust the picking height (158) of the corn header (200) to match the target picking height (158).

3. The control system (300) of any of claims 1-2, wherein the controller (316) is configured to:
receive a first input indicative of a corn header height guidance mode;
set the corn header height guidance mode in response to receiving the first input, wherein the corn header height guidance mode comprises:
determining the first return magnitude based on the first signal;
determining the second return magnitude based on the second signal;
detecting an ear layer (152) at the first vertical height of the first radar sensor (324) based on the first return magnitude, the second vertical height of the second radar sensor (322) based on the second return magnitude, or the combination thereof;
controlling the header height actuator (202) to decrease the picking height (158) of the corn header (200) in response to detecting the ear layer (152) at the first vertical height of the first radar sensor (324); and
controlling the header height actuator (202) to increase the picking height (158) of the corn header (200) in response to detecting the ear layer (152) at the second vertical height of the second radar sensor (322).

4. The control system (300) of claim 3, wherein the corn header height guidance mode comprises controlling the header height actuator (202) to adjust the picking height (158) of the corn header (200) such that the measured ear layer height (156) is positioned above the first vertical height, and the second vertical height is positioned above the measured ear layer height (156).

5. The control system (300) of any of claims 1-4, wherein the first radar sensor (324) is configured to be angled upwardly with respect to a longitudinal axis (142), inwardly with respect to the longitudinal axis (142), or the combination thereof, and the second radar sensor (322) is configured to be angled upwardly with respect to the longitudinal axis (142), inwardly with respect to the longitudinal axis (142), or the combination thereof.

6. The control system (300) of any of claims 1-5, wherein the controller (316) is configured to:
receive a second input indicative of a baseline target picking height of the corn header (200);
determine the baseline target picking height of the corn header (200) in response to receiving the second input; and
control the header height actuator (202) to adjust the picking height (158) of the corn header (200) to match the baseline target picking height (158).

7. The control system (300) of claim 6, wherein the controller (316) is configured to:
adjust the baseline target picking height to establish an updated target picking height based on the measured ear layer height (156) and the baseline target picking height; and
control the header height actuator (202) to adjust the picking height (158) of the corn header (200) to match the updated target picking height.

8. The control system (300) of any of claims 1-7, wherein the controller (316) is configured to:
determine the target picking height of the corn header (200), wherein the target picking height is below the measured ear layer height (156); and
control the header height actuator (202) to adjust the picking height (158) of the corn header (200) to match the target picking height.

9. The control system (300) of any of claims 1-8, wherein the controller (316) is configured to:
determine the measured ear layer height (156) based on a first relationship between a first distance between the first radar sensor (324) and the ear layer, and a first orientation of the first radar sensor (324), and the controller (316) is configured to determine the first distance between the first radar sensor (324) and the ear layer based on a first peak (508) within the first return magnitude; and
determine the measured ear layer height (156) based on a second relationship between a second distance between the second radar sensor (322) and the ear layer, and a second orientation of the second radar sensor (322), and the controller (316) is configured to determine the second distance between the second radar sensor (322) and the ear layer based on a second peak (508) within the second return magnitude.

10. The control system (300) of any of claims 1-9, wherein the first radar sensor (324) is configured to be angled upwardly with respect to the longitudinal axis (142), the second radar sensor (322) is configured to be angled downwardly with respect to the longitudinal axis (142), and the controller (316) is configured to determine the measured ear layer height (156) based on the first return magnitude at the first plurality of targets and the second return magnitude at the second plurality of targets.

11. The controller (316) of any of claims 1-10, wherein the picking height (158) of the corn header (200) is located at a threshold distance (160) below the measured ear layer height (156).

12. The control system (300) of any of claims 1-11, wherein the controller (316) is configured to:
control a first sensor orientation actuator (306) to adjust the first orientation of the first radar sensor (324) to a plurality of orientations;
receive the first signal from the first radar sensor (324) while the first radar sensor (324) is oriented at each of the plurality of orientations;
determine a plurality of measured ear layer heights (156) based on the first return magnitude at the first plurality of targets for the plurality of orientations;
determine an aggregate ear layer height (156) based on the plurality of measured ear layer heights (156); and
control the header height actuator (202) to adjust the picking height (158) of the corn header (200) based on the aggregate ear layer height (156).
